# EUROPEAN PATENT SPECIFICATION

(11) **EP 0 905 284 B1**
(45) Date of publication and mention of the grant of the patent: **03.04.2002**
(21) Application number: 98117608.4
(22) Date of filing: 30.08.1995
(51) Int. Cl.: C25C 3/08

(54) **Aluminium electrowinning cell with drained cathode**
Aluminium Elektrolysezelle mit drainierfähige Kathode
Cuve d'électrolyse d'aluminium à cathode drainée

(30) Priority: 08.09.1994 US 302178
(43) Date of publication of application: 31.03.1999
(62) Divisional of application: 95927945.6
(73) Proprietor: MOLTECH Invent S.A., 2320 Luxembourg (LU)
(72) Inventor: De Nora, Vittorio, Nassau (BS)
(74) Representative: Cronin, Brian

(56) References cited:
- EP-A- 0 393 816
- WO-A-92/03597
- WO-A-93/20026
- WO-A-93/25731

## Description

### Field of the Invention

The present invention concerns a cell for the electrowinning of aluminium by the electrolysis of alumina dissolved in a fluoride-based molten electrolyte such as cryolite, incorporating an improved cathode bottom.

### Background of the Invention

The technology for the production of aluminium by the electrolysis of alumina, dissolved in molten cryolite containing salts, at temperatures around 950°C is more than one hundred years old.

This process, conceived almost simultaneously by Hall and Héroult, has not evolved as much as other electrochemical processes, despite the tremendous growth in the total production of aluminium that in fifty years has increased almost one hundred fold. The process and the cell design have not undergone any great change or improvement and carbonaceous materials are still used as electrodes and cell linings.

The electrolytic cell trough is typically made of a steel shell provided with an insulating lining of refractory material covered by pre-baked anthracite-graphite or all graphite carbon blocks at the wall and at the cell floor bottom which acts as cathode and to which the negative pole of a direct curlas of steel conductor bars embedded in the carbon blocks.

The anodes are still made of carbonaceous material and must be replaced every few weeks. The operating temperature is still approximately 950°C in order to have a sufficiently high rate of dissolution of alumina which decreases at lower temperatures and to have a higher conductivity of the electrolyte.

The carbonaceous materials used in Hall-Héroult cells as cell lining deteriorate under the existing adverse operating conditions and limit the cell life.

The anodes have a very short life because during electrolysis the oxygen which should evolve on the anode surface combines with the carbon to form CO₂ and small amounts of CO. The actual consumption of the anode is approximately 450 kg/ton of aluminium produced which is more than 1/3 higher than the theoretical amount.

The carbon lining of the cathode bottom has a useful life of a few years after which the operation of the entire cell must be stopped and the cell relined at great cost. Despite an aluminium pool having a thickness of 15 to 20 cm maintained over the cathode, the deterioration of the cathode carbon blocks cannot be avoided because of penetration of sodium into the carbon which by chemical reaction and intercalation causes swelling, deformation and disintegration of the cathode carbon blocks, as well as penetration of cryolite and liquid aluminium.

The carbon blocks of the cell side wall do not resist oxidation and attack by cryolite and a layer of solidified cryolite has to be maintained on the cell side walls to protect them. In addition, when cells are rebuilt, there are problems of disposal of the carbon cathodes which contain toxic compounds including cyanides.

Another major drawback, however, is due to the fact that irregular electromagnetic forces create waves in the molten aluminium pool and the anode-cathode distance (ACD), also called inter-electrode gap (IEG), must be kept at a safe minimum value of approximately 50 mm to avoid short circuiting between the aluminium cathode and the anode or re-oxidation of the metal by contact with the CO₂ gas formed at the anode surface.

The high electrical resistivity of the electrolyte, which is about 0.4 ohm. cm., causes a voltage drop which alone represents more than 40% of the total voltage drop with a resulting energy efficiency which reaches only 25% in the most modern cells. The high cost of energy together with the low efficiency, has become an even bigger item in the total manufacturing cost of aluminium since the oil crisis, and has decreased the rate of growth of this important metal.

In the second largest electrochemical industry following aluminium, namely the caustic and chlorine industry, the invention of the dimensionally stable anodes (DSA®) based on noble metal activated titanium metal, which were developed around 1970, permitted a revolutionary progress in the chlorine cell technology resulting in a substantial increase in cell energy efficiency, in cell life and in chlorine-caustic purity. The substitution of graphite anodes with DSA® increased drastically the life of the anodes and reduced substantially the cost of operating the cells. Rapid growth of the chlorine caustic industry was retarded only by ecological concerns.

In the case of aluminium production, pollution is not due to the aluminium produced, but to the materials and the manufacturing processes used and to the cell design and operation.

However, progress has been reported in the operation of modern aluminium plants which utilise cells where the gases emanating from the cells are in large part collected and adequately scrubbed and where the emission of highly polluting gases during the manufacture of the carbon anodes and cathodes is carefully controlled.

While progress has been reported in the fabrication of carbon cathodes by the application of coatings or layers using new aluminium wettable materials which are also a barrier to sodium penetration during electrolysis, no progress has been achieved in design of cathodes for aluminium production cells with a view to restraining movement of the molten aluminium in order to reduce the inter-electrode gap and the rate of wear of its surface.

U.S. Patent 4,560,488 (Sane et al) discloses a recent development in molten salt electrolysis cells concerning making materials wettable by molten aluminium. However, the carbon or graphite anodes and cathodes are of conventional design with no suggestion leading to the present invention.

U.S. Patent 4,681,671 (Duruz) illustrates another improvement in molten salt electrolysis wherein operation at lower than usual temperatures is carried out utilising permanent anodes, e.g. metal, alloy, ceramic or a metal-ceramic composite as disclosed in European Patent Application No. 0030834 and U.S. Patent 4,397,729. Again, while improved operation is achieved at lower temperatures, there is no suggestion of the subject matter of the present invention.

PCT Application WO 89/06289 (La Camera et al) deals with an improved molten electrolysis wherein attention is directed to an electrode having increased surface area. However, again, there is no disclosure leading one to the present invention.

U.S. Patents 3,400,061 (Lewis et al) and 4,602,990 (Boxall et al) disclose aluminium electrowinning cells with sloped drained cathodes arranged with the cathodes and facing anode surfaces sloping across the cell. In these cells, the molten aluminium flows down the sloping cathodes into a median longitudinal groove along the centre of the cell, or into lateral longitudinal grooves along the cell sides, for collecting the molten aluminium and delivering it to a sump.

U.S. Patent 5,203,971 (de Nora et al) discloses an aluminium electrowinning cell having a partly refractory and partly carbon based cell lining. The carbon-based part of the cell bottom may be recessed in respect to the refractory part, which assists in reducing movement of the aluminium pool.

US Patent 3,856,650 (Kugler) proposed lining a carbon cell bottom with a ceramic coating upon which parallel rows of tiles are placed, in the molten aluminium, in a grating-like arrangement in an attempt to reduce wear due to movements of the aluminium pool.

To restrict movement in a "deep" cathodic pool of molten aluminium, US Patent No 4,824,531 (Duruz et al) proposed filling the cell bottom with a packed bed of loose pieces of refractory material. Such a design has many potential advantages but, because of the risk of forming a sludge by detachment of particles from the packed bed, the design has not found acceptance. US Patent No 4,443,313 (Dewing et al) sought to avoid this disadvantage of the previously mentioned loose packed bed by providing a monolayer of closely packed small ceramic shapes such as balls, tubes or honeycomb tiles.

The following references disclose several other improvements in cell operation.
European Patent Application No. 0308015 (de Nora) discloses a novel current collector;
European Patent Application No. 0308013 (de Nora) deals with a novel composite cell bottom; and
European Patent Application No. 0132031 (Dewing) provides a novel cell lining.

While the foregoing references indicate continued efforts to improve the operation of molten cell electrolysis operations, none suggest the invention and all proposals for means to restrain movement of the aluminium pool or layer on the cell bottom have proven to be ineffective.

### Summary of the Invention

This invention aims to overcome problems inherent in the conventional design of drained cells used in the electrowinning of aluminium via electrolysis of alumina dissolved in molten fluoride-based melts in particular cryolite, notably by proposing an improved cell bottom which incorporates means for collecting and evacuating the drained molten aluminium.

The present invention permits more efficient cell operation by modifying the cell bottom design. Such a modified design may then be utilised in drained cell configurations.

The invention concerns an electrolytic cell for the electrowinning of aluminium from alumina dissolved in a fluoride-based molten electrolyte according to claim 1, having a cathode cell bottom comprising a series of sloped, V-shaped, aluminium-wettable cathode surfaces and a series of anodes face the sloped cathode surfaces. Each sloped cathode surface forms a drained cathode surface down which a layer of produced molten aluminium is continuously drained. The cell bottom is further provided with means for collecting and evacuating the drained molten aluminium.

In the improved cell bottom according to the invention, the means for collecting and evacuating the drained molten aluminium comprise a series of parallel recessed grooves or channels located along the bottom of the V-shaped cathode surfaces and extending below the sloped cathode surfaces for collecting and evacuating the molten aluminium drained from the bottom of the sloped cathode surfaces.

As described below and illustrated in the drawings the cell bottom incorporates carbon cathode blocks, each cathode block having one sloped top surface, side surfaces and a bottom surface. The cathode blocks are connected side-by-side transversally of the cell for example with ramming paste as in conventional cells or, preferably, by glue. The blocks are usually further provided with steel or other conductive bars for the delivery of current, the conductive bars are generally parallel to one another and transverse to the cell.

The surfaces of the blocks making up the cathode cell bottom are most preferably coated with a layer of aluminium-wettable refractory material, advantageously a particulate refractory hard metal boride applied from a slurry containing colloid, for example as disclosed in US Patent 5,651,874 (Sekhar et al).

When the cell is in use the surfaces of the cathode cell bottom are covered by a layer of molten aluminium forming a drained cathode surface, the recessed channels or grooves forming a canal serving to guide the flow of aluminium across the cell. The flow of aluminium may be maintained at a constant level in the recessed grooves or channels. In this drained configuration, the channels or grooves are partly filled with molten aluminium and the electrolysis takes place between the aluminium-wetted cathode and the facing anode surface. In this drained cathode configuration, as explained below, an arrangement will be provided for removing aluminium from the sides of the cell.

In this drained configuration the inter-electrode distance is reduced with a concomitant reduction of cell voltage and an increase in energy efficiency.

The recessed grooves or channels are so configured and arranged, in particular as regards their depth and the shape and angle of their walls, that the molten aluminium contained in the channels is restrained from movement in the longitudinal direction of the cell. In such a drained cell configuration, the aluminium can flow along the recessed groove or channel into a collection channel.

An advantage obtained with this channeled drained-cell bottom is that its life is extended in comparison with other electrolytic aluminium production cells. Moreover, the channeled cathode improves the uniformity of the current distribution and increases the current efficiency. In addition, the recessed grooves or channels can serve to eliminate sludge which collects in the grooves or channels but is flushed out with the molten aluminium.

In most embodiments, the recessed channels or grooves have a generally U-shaped, in particular rectangular, cross-section designed to permit the evacuation and collection of aluminium.

Advantageously, there may be at least one cross channel or groove which extends along the cell and intersects with the recessed channels or grooves. Such cross channels or grooves may serve to drain the aluminium down the inclined cathode surfaces, hence guiding the flow of molten aluminium down these surfaces into the recessed channels or grooves. Cross channels or grooves of suitable dimensions can also serve for the removal of the molten aluminium to an aluminium reservoir.

Cross channels or grooves may run down the sloping cathode bottom surface to facilitate drainage of the aluminium.

In general, the recessed channels or grooves may lead into at least one channel arranged longitudinally of the cell for collecting the molten aluminium, and preferably having means such as a weir for maintaining a constant level of aluminium in the recessed channels or grooves. This aluminium collection channel may extend along one or both sides of the cell, or could be a deep central channel machined in the cathode blocks.

Preferably, the cell bottom is made of carbon blocks whose surfaces are treated to reduce sodium penetration, for example as described in US Patent 5,378,327 or in US Patent 5,679,224, or are coated with a layer which reduces sodium penetration, for example a refractory hard metal boride applied from a slurry containing colloid as disclosed in US Patent 5,651,874 (all in the name of Sekhar et al).

In general, carbon cathode blocks are made resistant to chemical attack and to mechanical attack. The surfaces of carbon blocks making up the cathode cell bottom can also be coated with a layer which prior to use or in use becomes harder than the carbon cathode block and thereby protects the surface against abrasive wear by limited movement of the molten aluminium. Moreover, the hardened cathode surface remains dimensionally stable whereas a facing carbon anode may erode and conform to the shape of the cathode. This surface-hardening effect can be achieved with the aforementioned refractory boride or other aluminium wettable refractory layers which provide an essentially dimensionally stable surface.

In this way, a carbon cathode cell bottom can remain dimensionally stable during electrolysis, and because of this, it is both possible and advantageous to provide channels in the tops of the carbon cathode blocks because these channeled blocks will remain dimensionally stable during cell operation.

The cell incorporating the channeled cell bottom can employ conventional carbon anodes whose shape adapts to the channeled cathode bottom. Specially-shaped carbon anodes designed to co-operate with the channeled cathode design, and in particular to facilitate gas release at the anode while assisting drainage of molten aluminium at the cathode can also be used. Dimensionally stable anodes can also be employed.

The invention also relates to a carbon cathode block according to claim 15 suitable for the drained-cathode electrolytic cell as described hereabove for the electrowinning of aluminium from alumina dissolved in a fluoride-based molten electrolyte, ready to be installed in a cell. Such a block has one sloped top surface, side surfaces and a bottom surface, so that when several blocks are laterally placed side-by-side their top surfaces form a series of juxtaposed V-shaped surfaces. Each sloped surface, when coated with an aluminium-wettable refractory material, forms a drained cathode surface down which a layer of produced molten aluminium is continuously drained when the cathode block is in use to electrowin aluminium.

The cathode block comprises a cut-out along the lower edge of the sloped surface, so that when two cathode blocks are placed side-by-side to form a V-shaped top surface a recessed groove or channel is formed between them by juxtaposition of the cut-outs. The recessed grooves or channels are located along and below the bottom of the V-shaped surfaces, and serve to collect and evacuate the molten aluminium drained from the bottom of the sloped cathode surfaces, during cell operation.

This recessed channel or groove formed between two blocks, is so shaped and dimensioned that when the cathode blocks are used to electrowin aluminium, molten aluminium collected in the channel or groove is restrained from moving transversally to the channel or groove, providing substantial advantages in operation, as explained above.

These blocks, which can incorporate all of the features described in relation to the complete cell can be assembled side-by-side to form a cell bottom with alternately sloping sections which, at their lower intersections, form the aforesaid channels in the blocks' top surfaces.

A further aspect of the invention is a process to electrowin aluminium in a cell as described hereabove. The method comprises dissolving alumina in the electrolyte and electrolysing the dissolved alumina to produce aluminium on the sloped, V-shaped cathode surfaces. The product aluminium is then drained from the bottom of the sloped cathode surface into the recessed groove or channel where it is collected and evacuated.

### Description of the Drawings

Reference is now made to the drawings wherein:
- Figures 1 and 2 show comparative drained cells which do not incorporate the recessed groove or channel according to the invention;
- Figure 3 is a similar view of an electrolytic cell according to the invention, incorporating channeled cathode blocks and dimensionally stable anodes; and
- Figure 4 is a schematic plan view of the cell bottom of Figure 2 during operation, partly cut-away and with the anodes and cell superstructure not visible.

### Detailed Description of the Invention

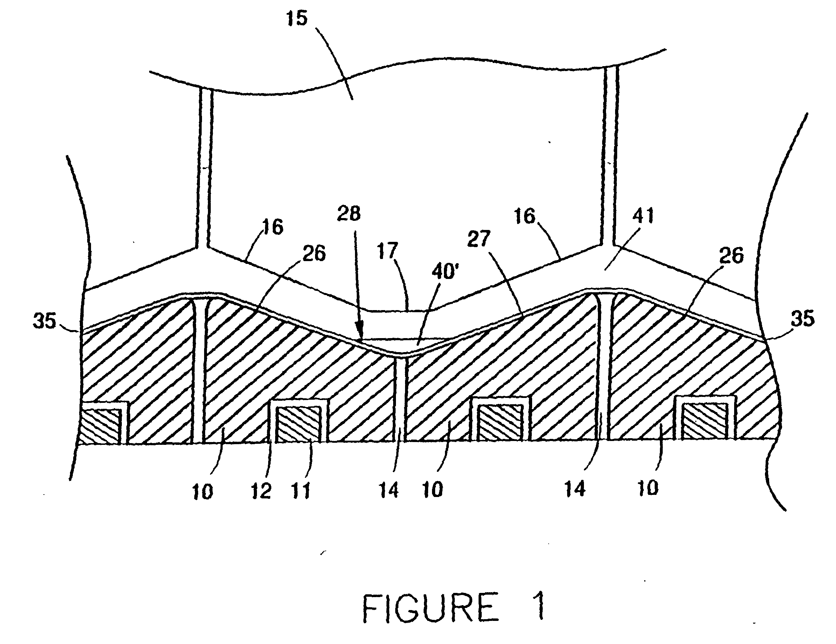

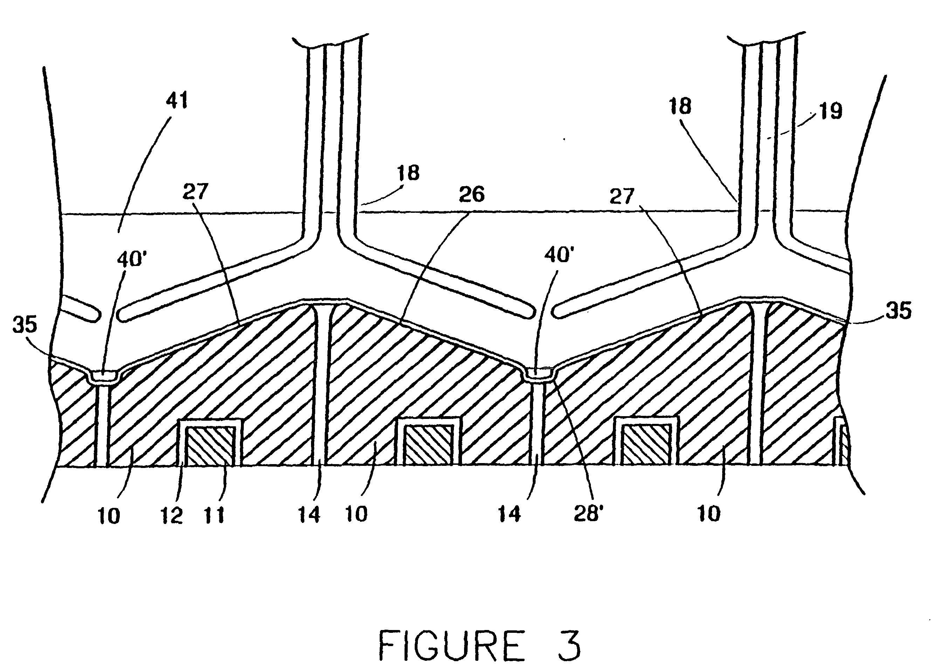

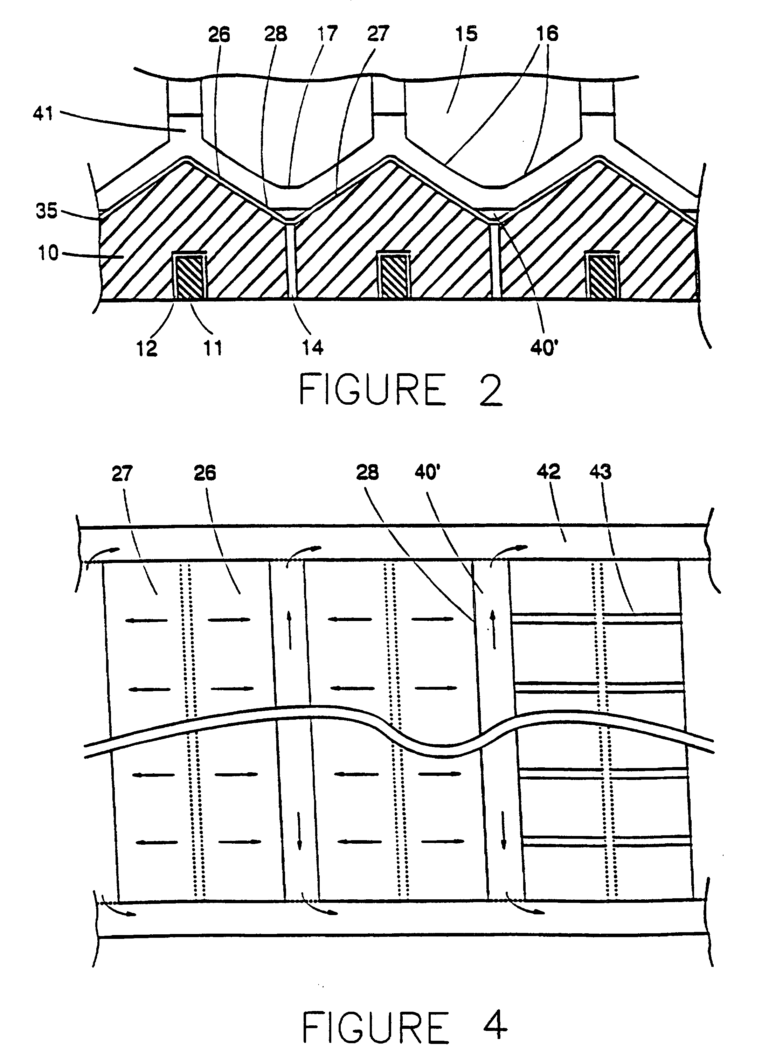

Figures 1 and 2, show parts of comparative aluminium drained cells whose cell bottoms are made up of a series of V-shaped carbon blocks 10 joined by ramming paste 14, but which are not provided with recessed grooves or channels according to the invention. Each V-shaped cathode bottom is formed by juxtaposing blocks 10. In Figure 1 each block 10 has an inclined top surface 26 or 27, the blocks 10 being arranged alternately facing one another so as to form a series of V-shaped channels 28 between adjacent blocks 10. In Figure 2 each block 10 has roof-like sloped top surfaces 26,27 so that when two blocks 10 are juxtaposed the roof-like top surfaces form a V-shaped channel 28 between the adjacent blocks 10.

In both Figures 1 and 2 the V-shaped channels 28 receive a stream or canal 40' of molten aluminium in their bottom part, running across the cell. Above the V-shaped channel 28 and the aluminium canal 40' are carbon anodes 15 with corresponding V-shaped active faces 16 terminating with a lower flattened part 17 opposite the aluminium canal 40'. This flattened part 17 can be formed in use.

The cells operate as drained cathode cells, wherein the aluminium produced on the inclined cathode surfaces 26 and 27 coated with an aluminium-wettable refractory coating 35 flows down the inclined surfaces 26,27, in the longitudinal direction of the cell, into the V-shaped channel 28 where it is collected in the aluminium canal 40'. The V-shaped channels 28 join into one or two side channels inclined in the longitudinal direction of the cell in order to permanently drain the product aluminium, at a rate to keep the level of aluminium canal 40' stable.

In this drained configuration, the V-shaped channels 28 are partly filled with molten aluminium so that the electrolysis takes place between the inclined aluminium-wetted cathode surfaces 26,27 and the facing inclined surfaces 16 of anode 15, as well as between the aluminium canal 40' and the facing flattened part 17 of the anode 15 which will wear in such a way as to conform to the opposing surfaces (26,27 and the flat top of canal 40'). Moreover, the inclination of the anode surfaces 16 assists in release of the anodically-formed gases.

Figure 3 illustrates a cell according to the invention, where the same elements are designated by the same references, but which includes dimensionally stable anodes 18 in a "roof" configuration straddling the tops of the adjacent cathode blocks 10 which also have alternately arranged inclined surfaces 26,27 coated with an aluminium-wettable refractory coating 35 as in Figure 1. However, the blocks of the invention are not limited to this configuration of inclined surfaces 26,27 but cover other configurations such as the roof-like configuration disclosed in Figure 2.

The anodes 18 are made of or coated with any suitable non-consumable or substantially non-consumable, electronically-conductive material resistant to the electrolyte and to the anodically produced oxygen and other gases, vapours and fumes present in the cell. The anodes 18 may for example have a metal, alloy or cermet substrate which is protected in use by a cerium-oxyfluoride-based protective coating produced and/or maintained by maintaining a concentration of cerium in the electrolyte, as described in U.S. patent 4,614,569 (Duruz et al).

Consumable carbon anodes 15 as shown in Figures 1 and 2 may also be used instead of the dimensionally stable anodes 18 for the purpose of this invention.

The cell of Figure 3 also operates as a drained cathode cell, wherein the aluminium produced on the inclined cathode surfaces 26 and 27 coated with an aluminium-wettable refractory coating 35 flows down to the bottom of these inclined surfaces where it is collected as an aluminium canal 40' in a recessed groove or channel 28' which is generally U-shaped in cross-section. This groove 28' is formed between cut-outs in the edges of the carbon blocks 10, when the blocks are fitted together. The cathode surfaces 26,27 are inclined in the longitudinal direction of the cell in order to permanently drain the product aluminium into the canal 40', and the aluminium is removed from this canal 40' at a rate to keep its aluminium level stable. In this drained configuration, the recessed grooves or channels 28' are filled with the molten aluminium forming canals 40'. Electrolysis takes place between the inclined aluminium-wetted cathode surfaces 26,27 and the facing inclined surfaces of the dimensionally-stable anodes 18. The inclination of the anodes 18 assists in releasing the anodically-formed gases through a central opening 19 and this can be further assisted if needed by providing ridges on the anodes 18 or making the anodes foraminate.

In operation, the cryolite-based electrolyte 41 is usually at a temperature of about 950°C, but the invention applies also to components used in cells with electrolytes well below 900°C, and as low as 700°C.

The inclined surfaces 26,27 and the recessed grooves or channels 28' of the carbon cathode blocks 10 can be made dimensionally stable by applying a coating 35 of an aluminium-wettable refractory hard metal (RHM) having little or no solubility in aluminium and having good resistance to attack by molten cryolite. Note that the coating 35 also covers the ramming paste 14. Useful RHM include borides of titanium, zirconium, tantalum, chromium, nickel, cobalt, iron, niobium and/or vanadium. Useful cathode materials are carbonaceous materials such as anthracite or graphite.

It is preferred that the cathode top surfaces of the present invention have a coating 35 of particulate refractory hard metal boride in a colloid applied from a slurry of the particulate refractory hard metal boride in a colloid carrier, wherein the colloid comprises at least one of colloidal alumina, silica, yttria, ceria, thoria, zirconia, magnesia, lithia, monoaluminium phosphate or cerium acetate. The colloidal carrier has been found to considerably improve the properties of the coating produced by non-reactive sintering.

US Patent 5,651,874 (Sekhar et al) provides a method of applying refractory hard metal boride to a carbon containing component of a cell for the production of aluminium, in particular by the electrolysis of alumina dissolved in a cryolite-based molten electrolyte, this method comprising applying to the surface of the component a slurry of particulate pre-formed refractory boride in a colloidal carrier as specified above, followed by drying, and by heat treatment before or after the component is installed in the aluminium production cell.

The method of application of the slurry to the cathode block 10 of the present invention involves painting (by brush or roller), dipping, spraying, or pouring the slurry onto the block 10 and allowing to dry before another layer is added. The coating 35 does not need to be entirely dry before the application of the next layer. It is preferred to heat the coating 35 with a suitable source so as to completely dry it and improve densification of the coating. Heating and drying take place preferably in non-oxidising atmospheres at about 80-200°C, usually for half an hour to several hours and further heat treatments are possible.

The cathode block 10 may be treated by sand blasting or pickled with acids or fluxes such as cryolite or other combinations of fluorides and chlorides prior to the application of the coating. Similarly the block 10 may be cleaned with an organic solvent such as acetone to remove oily products and other debris prior to the application of the coating. These treatments will enhance the bonding of the coatings to the cathode block 10.

After coating the cathode block by dipping, painting or spraying the slurry or combinations of such techniques in single or multi-layer coatings and drying, a final coat of the colloid alone may be applied lightly prior to use.

Before or after application of the coating 35 and before use, the cathode block 10 can be painted, sprayed, dipped or infiltrated with reagents and precursors, gels and/or colloids. For instance, before applying the slurry of particulate refractory boride in the colloidal carrier the cathode block 10 can be impregnated with e.g. a compound of lithium to improve the resistance to penetration by sodium, as described in US Patent 5,378,327 (Sekhar et al).

To assist rapid wetting of the cathode block 10 by molten aluminium, the refractory coating 35 on the block 10 may be exposed to molten aluminium in the presence of a flux assisting penetration of aluminium into the refractory material, the flux for example comprising a fluoride, a chloride or a borate, of at least one of lithium and sodium, or mixtures thereof. Such treatment favours aluminization of the refractory coating by the penetration therein of aluminium.

Figure 4 shows the aluminium flow in the cell of Figure 2 which is similar to the flow in the cell shown in Figure 3. The aluminium produced on the inclined cathode surfaces 26 and 27 coated with the aluminium-wettable refractory coating 35 flows down these surfaces and into the channel 28 (channel 28' in the cell of Figure 3) where it is collected in the aluminium canal 40'. The direction of flow of the molten aluminium is schematically indicated in Figure 4 by arrows. As shown, the channels 28 (28') join into two side channels 42, running along and inclined in the longitudinal direction of the cell, in order to permanently drain the product aluminium. The molten aluminium is drained at a rate to keep the level of the aluminium canals 40' stable, for example by having a weir at the outflow end of the side channels 42.

As illustrated in the right hand part of Figure 4, the two longitudinally sloping surfaces 26 and 27 of each cathode block 10 can be provided with cross channels or grooves 43 which run down these sloping surfaces 26 and 27 and lead into the main channel 28 (28') running across the cell. Any suitable number of cross grooves 43 can be provided with any suitable spacing. These cross grooves 43 guide the flow of aluminium down the sloping cathode surfaces 26,27, while restraining movement of the aluminium across the cell as it drains down these inclined cathode surfaces. Only once the drained aluminium joins the canal 40' can it flow freely across the cell to the side channels 28.

This arrangement of the cross grooves 43 down the inclined cathode surfaces 26,27, the main collecting grooves 28 across the cell, and the side channels 42 provides a perfectly controlled flow of the molten aluminium over the cell bottom, avoiding turbulence due to magnetohydrodynamic forces.

The side channels 42 can be formed in the ends of the cathode blocks 10, or can be made in the cell sidewalls, or can be a combination of bevels or cut-outs in the ends of the cathode blocks 10, co-operating with bevels or ledges in the cell sidewalls. Additionally or alternatively, a central channel could be provided by machining recesses in the centre parts of the inclined walls 26, 27 of the cathode blocks 10, or by making each cathode section from two cathode blocks placed end-to-end, with cut-outs in the facing ends.

## Claims

1. An electrolytic cell for the electrowinning of aluminium from alumina dissolved in a fluoride-based molten electrolyte, having a series of anodes (15) facing a cathode cell bottom which comprises a series of juxtaposed sloped, V-shaped, aluminium-wettable cathode surfaces (26,27) forming side-by-side parallel alternating V-shaped and inverted V-shaped drained cathode surfaces down which a layer of produced molten aluminium is continuously drained, the cathode cell bottom being made of a series of side-by-side juxtaposed cathode blocks (10), each cathode block having one sloped aluminium-wettable cathode top surface (26,27) and a cut-out along and below the lower edge of its sloped top surface, so that two cathode blocks placed laterally side-by-side along the lower edges of their sloped top surfaces form one of said V-shaped cathode surfaces with a recessed groove or channel (28') formed between them by juxtaposition of their cut-outs, said recessed groove or channel being located along and below the bottom of the V-shaped cathode surface and arranged to collect and evacuate the molten aluminium drained from the bottom of the adjacent sloped cathode top surfaces (26,27).

2. The electrolytic cell of claim 1, wherein the cathode cell bottom is made of carbon cathode blocks (10), each block having at least one sloped top surface (26,27), side surfaces and a bottom surface; the cathode blocks being connected side-by-side transverse to the cell, the sloped top surfaces being coated with a layer (35) of aluminium-wettable refractory hard material, the blocks being further provided with steel or other conductive bars (11) for the delivery of current, said conductive bars (11) being generally parallel to one another and transverse to the cell.

3. The electrolytic cell of claim 2, wherein the sloped cathode surfaces (26,27) are coated with an aluminium-wettable layer (35) comprising metal boride.

4. The electrolytic cell of any preceding claim, wherein the molten aluminium is at a constant level within the recessed grooves or channels.

5. The electrolytic cell any preceding claim, wherein the recessed grooves or channels (28') have a generally U-shaped cross-section.

6. The electrolytic cell of claim 5, wherein the recessed grooves or channels (28') have a rectangular cross-section.

7. The electrolytic cell of any preceding claim, wherein the sloped cathode surfaces (26,27) further comprise at least one cross channel or groove (29,43) which intersects with the parallel recessed grooves or channels (28'), said cross channel or groove (29,43) extending longitudinally of the cell.

8. The electrolytic cell of claim 7, wherein the cell bottom comprises a plurality of pairs of two longitudinally sloping parts (26,27) and the cross channels or grooves (29,43) run down these sloping parts, there being at the intersection of the two sloping parts a collecting recessed groove or channel (28'), said cross channels or grooves (29,43) leading to an aluminium reservoir.

9. The electrolytic cell of any preceding claim, wherein the recessed grooves or channels (28') extend transversally of the cell and lead into at least one channel (29,42) arranged longitudinally of the cell for collecting the molten aluminium.

10. The electrolytic cell of claim 2, 3 or any one of claims 4 to 9 when depending on claim 2, wherein the sloping surfaces (26,27) of the carbon blocks (10) making up the cathode cell bottom are treated to reduce sodium penetration.

11. The electrolytic cell of claim 2, 3 or any one of claims 4 to 9 when depending on claim 2, wherein the sloping surfaces (26,27) of the carbon blocks making up the cathode cell bottom are coated with a layer (35) which reduces sodium penetration.

12. The electrolytic cell of claim 2, 3 or any one of claims 4 to 9 when depending on claim 2, wherein the sloping surfaces (26,27) of the carbon blocks making up the cathode cell bottom are coated with a layer (35) which prior to or in use becomes harder than the carbon cathode block.

13. The electrolytic cell of claim 2, 3 or any one of claims 4 to 9 when depending on claim 2, wherein the carbon cathode blocks (10) remain dimensionally stable during electrolysis.

14. The electrolytic cell of claim 2, 3 or any one of claims 4 to 9 when depending on claim 2, wherein the carbon cathode blocks (10) are made resistant to chemical and mechanical attack.

15. A carbon cathode block (10) of a drained-cathode electrolytic cell for the electrowinning of aluminium from alumina dissolved in a fluoride-based molten electrolyte, having one sloped cathode top surface, side surfaces, a bottom surface and a cut-out extending along and below the lower edge of the sloped cathode top surface (26,27), the sloped cathode top surface when coated with an aluminium-wettable refractory material forming a drained cathode surface adapted to form part of a series of juxtaposed, sloped, V-shaped surfaces (26,27) forming side-by-side parallel alternating V-shaped and inverted V-shaped drained cathode surfaces down which during use in a cell a layer of produced molten aluminium is continuously drained, the cut-out being adapted to form part of a recessed groove or channel for the collection and evacuation of the molten aluminium drained from the bottom of the sloped cathode top surface when the block is assembled in a cell.

16. The carbon cathode block of claim 15, wherein the bottom surface of the cathode block (10) has a groove (12) or like recess extending therealong generally parallel to the top surface and to one side surface of the cathode block, for receiving a steel or other conductive bar (11) for the delivery of current.

17. The carbon cathode block of claim 15 or 16, wherein said cut-out is so shaped that after assembly of the block in a cell the cut-out forms part of a recessed groove or channel (28') with a generally U-shaped cross-section.

18. The carbon cathode block of claim 17, wherein said cut-out is so shaped that after assembly of the block in a cell the cut-out forms part of a recessed groove or channel (28') with a rectangular cross-section.

19. The carbon cathode block of any one of claims 16 to 18, further comprising in its top surface at least one cross channel or groove (29,43) which intersects with, the cut-out.

20. The carbon cathode block of any one of claims 16 to 19, wherein its top surface is coated with a layer (35) of aluminium-wettable refractory material.

21. The carbon cathode block of any one of claims 16 to 20, comprising a steel or other conductive bar (11) secured in the groove (12) or like recess in the bottom surface of the block by cast iron or another electrically conductive bonding material.

22. A process to electrowin aluminium in a cell according to any one of claims 1 to 14, wherein the dissolved alumina is electrolysed to produce aluminium on the sloped, V-shaped cathode surfaces (26,27), and then drained from the bottom of the sloped cathode surface (26,27) into the recessed grooves or channels (28') where it is collected and evacuated.

23. The process of claim 22, wherein the product aluminium is maintained at a constant level within the recessed grooves or channels (28').

## Patentansprüche

1. Elektrolytische Zelle für die elektrolytische Gewinnung von Aluminium aus Aluminiumoxid, das in einem auf Fluorid basierenden, geschmolzenen Elektrolyt gelöst ist, mit einer Reihe von Anoden (15), die einem Kathoden-Zellen-Boden zugewandt sind, der eine Reihe von nebeneinanderliegenden, abgeschrägten, V-förmigen, mit Aluminium benetzbaren Kathoden-Flächen (26, 27) hat, die seitlich nebeneinanderliegende, parallel verlaufende, alternierende, V-förmige und invertiert V-förmige, drainierfähige Kathoden-Flächen bilden, an denen herab kontinuierlich eine Schicht aus produziertem, geschmolzenen Aluminium drainiert wird, wobei der Kathoden-Zellen-Boden aus einer Reihe von seitlich nebeneinanderliegenden Kathoden-Blöcken (10) aufgebaut ist, wobei jeder Kathoden-Block eine abgeschrägte, mit Aluminium benetzbare Kathoden-Oberfläche (26, 27) sowie eine Aussparung entlang und unter der unteren Kante von seiner abgeschrägten Oberfläche hat, so daß zwei Kathoden-Blöcke, die seitlich nebeneinander entlang der unteren Kanten ihrer abgeschrägten Oberflächen angeordnet sind, eine der V-förmigen Kathoden-Flächen bilden, mit einer ausgesparten Nut bzw. Kanal (28'), der dazwischen durch Juxtaposition von deren Aussparungen gebildet ist, wobei die ausgesparte Nut bzw. Kanal entlang und unter dem Boden der V-förmigen Kathoden-Fläche angeordnet und dazu ausgestaltet ist, um das geschmolzene Aluminium zu sammeln und abzuleiten, das von dem Boden der benachbarten, abgeschrägten Kathoden-Oberflächen (26, 27) drainiert wird.

2. Elektrolytische Zelle nach Anspruch 1, bei der der Kathoden-Zellen-Boden aus Kohlenstoff-Kathoden-Blöcken (10) besteht, jeder Block zumindest eine abgeschrägte Oberfläche (26, 27), Seitenflächen und eine Bodenfläche hat; die Kathoden-Blöcke seitlich nebeneinander und quer zu der Zelle verbunden sind; die abgeschrägten Oberflächen mit einer Schicht (35) aus mit Aluminium benetzbarem, hitzebeständigen, harten Material überdeckt sind; und die Blöcke außerdem mit Stahl-Stangen oder anderen konduktiven Stangen (11) für die Zuführung von Strom versehen sind, wobei die konduktiven Stangen (11) im wesentlichen parallel zueinander und quer zu der Zelle verlaufen.

3. Elektrolytische Zelle nach Anspruch 2, bei der die abgeschrägten Kathoden-Flächen (26, 27) mit einer mit Aluminium benetzbaren Schicht (35) beschichtet sind, die Metall-Borid enthält.

4. Elektrolytische Zelle nach einem der vorherigen Ansprüche, bei der das geschmolzene Aluminium in den ausgesparten Nuten bzw. Kanälen einen konstanten Pegel hat.

5. Elektrolytische Zelle nach einem der vorherigen Ansprüche, bei der die ausgesparten Nuten bzw. Kanäle (28') einen im wesentlichen U-förmigen Querschnitt haben.

6. Elektrolytische Zelle nach Anspruch 5, bei der die ausgesparten Nuten bzw. Kanäle (28') einen rechteckigen Querschnitt haben.

7. Elektrolytische Zelle nach einem der vorherigen Ansprüche, bei der die abgeschrägten Kathoden-Flächen (26, 27) außerdem zumindest einen Quer-Kanal bzw. Quer-Nut (29, 43) aufweisen, die sich mit den parallel verlaufenden, ausgesparten Nuten bzw. Kanälen (28') kreuzt, wobei der Quer-Kanal bzw. die Quer-Nut (29, 43) in Längsrichtung der Zelle verläuft.

8. Elektrolytische Zelle nach Anspruch 7, bei der der Zellen-Boden eine Vielzahl von Paaren von zwei in Längsrichtung abgeschrägten Teilen (26, 27) aufweist und die Quer-Kanäle bzw. Quer-Nuten (29, 43) entlang dieser abgeschrägten Teile verlaufen, wobei sich an dem Schnittpunkt der beiden abgeschrägten Teile eine ausgesparte Sammel-Nut bzw. Sammel-Kanal (28') befindet, wobei die Quer-Kanäle bzw. Quer-Nuten (29, 43) zu einem Aluminium-Reservoir führen.

9. Elektrolytische Zelle nach einem der vorherigen Ansprüche, bei der sich die ausgesparten Nuten bzw. Kanäle (28') quer zu der Zelle erstrecken und in zumindest einen Kanal (29, 42) führen, der in Längsrichtung der Zelle angeordnet ist, um geschmolzenes Aluminium zu sammeln.

10. Elektrolytische Zelle nach Anspruch 2 oder 3 oder nach einem der Ansprüche 4 bis 9, sofern abhängig von Anspruch 2, bei der die abgeschrägten Flächen (26, 27) der Kohlenstoff-Blöcke (10), aus denen der Kathoden-Zellen-Boden hergestellt ist, behandelt sind, um das Eindringen von Natrium zu vermindern.

11. Elektrolytische Zelle nach Anspruch 2 oder 3 oder nach einem der Ansprüche 4 bis 9, sofern abhängig von Anspruch 2, bei der die abgeschrägten Flächen (26, 27) der Kohlenstoff-Blöcke, aus denen der Kathoden-Zellen-Boden hergestellt ist, mit einer Schicht (35) beschichtet sind, die das Eindringen von Natrium reduziert.

12. Elektrolytische Zelle nach Anspruch 2 oder 3 oder nach einem der Ansprüche 4 bis 9, sofern abhängig von Anspruch 2, bei der die abgeschrägten Flächen (26, 27) der Kohlenstoff-Blöcke, aus denen der Kathoden-Zellen-Boden hergestellt ist, mit einer Schicht (35) beschichtet sind, die vor oder bei Benutzung härter wird als der Kohlenstoff-Kathoden-Block.

13. Elektrolytische Zelle nach Anspruch 2 oder 3 oder nach einem der Ansprüche 4 bis 9, sofern abhängig von Anspruch 2, bei der die Kohlenstoff-Kathoden-Blöcke (10) während der Elektrolyse konstante Abmessungen behalten.

14. Elektrolytische Zelle nach Anspruch 2 oder 3 oder nach einem der Ansprüche 4 bis 9, sofern abhängig von Anspruch 2, bei der die Kohlenstoff-Kathoden-Blöcke (10) gegen chemische und mechanische Angriffe widerstandsfähig gemacht sind.

15. Kohlenstoff-Kathoden-Block (10) von einer elektrolytischen Zelle mit drainierfähiger Kathode für die elektrolytische Gewinnung von Aluminium aus Aluminiumoxid, das in einem auf Fluorid basierenden, geschmolzenen Elektrolyt gelöst ist, mit einer abgeschrägten Kathoden-Oberfläche, Seitenflächen, einer Bodenfläche und einer Aussparung, die sich entlang und unter der unteren Kante von der abgeschrägten Kathoden-Oberfläche (26, 27) erstreckt, wobei die abgeschrägte Kathoden-Oberfläche, wenn sie mit einem mit Aluminium benetzbaren, hitzebeständigen Material beschichtet ist, eine drainierfähige Kathoden-Fläche bildet, die dazu ausgestaltet ist, um'einen Teil von einer Reihe von nebeneinanderliegenden, abgeschrägten, V-förmigen Flächen (26, 27) zu bilden, die seitlich nebeneinanderliegende, parallel verlaufende, alternierende, V-förmige und invertiert V-förmige, drainierfähige Kathoden-Flächen bilden, an denen herab, während der Benutzung in einer Zelle, kontinuierlich eine Schicht aus produziertem, geschmolzenen Aluminium drainiert wird, wobei die Aussparung dazu ausgestaltet ist, um einen Teil von einer ausgesparten Nut bzw. Kanal für das Sammeln und Ableiten von dem geschmolzenen Aluminium zu bilden, das von dem Boden der abgeschrägten Kathoden-Oberfläche drainiert wird, wenn der Block in eine Zelle eingebaut ist.

16. Kohlenstoff-Kathoden-Block nach Anspruch 15, bei dem die Bodenfläche von dem Kathoden-Block (10) eine Nut (12) oder eine ähnliche Aussparung hat, die sich daran entlang im wesentlichen parallel zu der Oberfläche und zu einer Seitenfläche des Kathoden-Blocks erstreckt, um eine Stahl-Stange oder eine andere konduktive Stange (11) aufzunehmen, um Strom zuzuführen.

17. Kohlenstoff-Kathoden-Block nach Anspruch 15 oder 16, bei dem die Aussparung so geformt ist, daß die Aussparung nach der Montage von dem Block in einer Zelle einen Teil von einer ausgesparten Nut bzw. einem Kanal (28') bildet, der einen im wesentlichen U-förmigen Querschnitt hat.

18. Kohlenstoff-Kathoden-Block nach Anspruch 17, bei dem die Aussparung so geformt ist, daß die Aussparung nach der Montage von dem Block in einer Zelle einen Teil von einer ausgesparten Nut bzw. einem Kanal (28') bildet, der einen rechteckigen Querschnitt hat.

19. Kohlenstoff-Kathoden-Block nach einem der Ansprüche 16 bis 18, der außerdem in seiner Oberfläche zumindest einen Quer-Kanal bzw. eine Quer-Nut (29, 43) aufweist, die sich mit der Aussparung schneidet.

20. Kohlenstoff-Kathoden-Block nach einem der Ansprüche 16 bis 19, bei dem dessen Oberfläche mit einer Schicht (35) aus mit Aluminium benetzbarem, hitzebeständigen Material beschichtet ist.

21. Kohlenstoff-Kathoden-Block nach einem der Ansprüche 16 bis 20, mit einer Stahl-Stange oder anderen konduktiven Stange (11), die in der Nut (12) oder einer ähnlichen Aussparung in der Bodenfläche von dem Block durch Gußeisen oder durch ein anderes elektrisch konduktives Befestigungsmaterial befestigt ist.

22. Verfahren zur elektrolytischen Gewinnung von Aluminium in einer Zelle nach einem der Ansprüche 1 bis 14, bei dem das gelöste Aluminiumoxid einer Elektrolyse ausgesetzt wird, um Aluminium an der abgeschrägten, V-förmigen Kathoden-Flächen (26, 27) zu erzeugen, und dann vom Boden der abgeschrägten Kathoden-Fläche (26, 27) in die ausgesparten Nuten bzw. Kanäle (28') drainiert wird, wo es gesammelt oder abgeleitet wird.

23. Verfahren nach Anspruch 22, bei dem das erzeugte Aluminium in den ausgesparten Nuten bzw. Kanälen (28') auf einem konstanten Pegel gehalten wird.

## Revendications

1. Cuve électrolytique pour l'électro-obtention d'aluminium à partir d'alumine dissoute dans un électrolyte fondu à base de fluorure, ayant une série d'anodes (15) faisant face à un fond de cuve de cathode, qui comprend une série de surfaces de cathode mouillable à l'aluminium, conformées en V, inclinées, juxtaposées (26, 27) formant des surfaces de cathode drainées en forme de V et en forme de V inversé en alternance, parallèles, côte à côte, où une couche d'aluminium fondu produit est continuellement évacuée, le fond de cuve de cathode étant constitué d'une série de blocs de cathode juxtaposés côte à côte (10), chaque bloc de cathode ayant une surface de dessus de cathode mouillable à l'aluminium, inclinée (26, 27) et une découpe le long et sous le bord inférieur de sa surface de dessus inclinée, de sorte que deux blocs de cathode, placés latéralement côte à côte le long des bords inférieurs de leurs surfaces de dessus inclinées, forment l'une desdites surfaces de cathode en forme de V avec un canal ou rainure évidé (28') formé entre elles par juxtaposition de leurs découpes, ledit canal ou rainure évidé étant situé le long et sous le fond de la surface de cathode conformée en V, et agencé pour recueillir et évacuer l'aluminium fondu drainé à partir du fond des surfaces de dessus de cathode, inclinées, adjacentes (26, 27).

2. Cuve électrolytique selon la revendication 1, dans laquelle le fond de cuve de cathode est constitué de blocs de cathode en carbone (10), chaque bloc ayant au moins une surface de dessus inclinée (26, 27), des surfaces latérales et une surface de fond ; les blocs de cathode étant reliés côte à côte transversalement à la cuve, les surfaces de dessus inclinées étant enrobées d'une couche (35) de matière dure réfractaire mouillable à l'aluminium, les blocs étant de plus munis de barres conductrices en acier ou autre (11) pour la distribution de courant, lesdites barres conductrices (11) étant généralement parallèles les unes des autres et transversales à la cuve.

3. Cuve électrolytique selon la revendication 2, dans laquelle les surfaces de cathode inclinées (26, 27) sont enrobées d'un revêtement mouillable à l'aluminium (35) comprenant du borure métallique.

4. Cuve électrolytique selon une quelconque revendication précédente, dans laquelle l'aluminium fondu est à un niveau constant dans les rainures ou canaux évidés.

5. Cuve électrolytique selon une quelconque revendication précédente, dans laquelle les rainures ou canaux évidés (28') présentent une section transversale conformée généralement en U.

6. Cuve électrolytique selon la revendication 5, dans laquelle les rainures ou canaux évidés (28') présentent une section transversale rectangulaire.

7. Cuve électrolytique selon une quelconque revendication précédente, dans laquelle les surfaces de cathode inclinées (26, 27) comprennent de plus au moins un canal ou rainure transversal (29, 43) qui coupe les rainures ou canaux évidés parallèles (28'), ledit canal ou rainure transversal (29, 43) s'étendant longitudinalement à la cuve.

8. Cuve électrolytique selon la revendication 7, dans laquelle le fond de cuve comprend une pluralité de paires de deux parties inclinées longitudinalement (26, 27) et les canaux ou rainures transversaux (29, 43) s'étendent sous ces parties inclinées en ayant, au niveau de l'intersection des deux parties inclinées, une rainure ou un canal évidé de collecte (28'), lesdits canaux ou rainures transversaux (29, 43) menant à un réservoir d'aluminium.

9. Cuve électrolytique selon une quelconque revendication précédente, dans laquelle les rainures ou canaux évidés (28') s'étendent transversalement à la cuve et mènent dans au moins un canal (29, 42) agencé longitudinalement à la cuve pour recueillir l'aluminium fondu.

10. Cuve électrolytique selon la revendication 2, 3 ou une quelconque des revendications 4 à 9 quand elles dépendent de la revendication 2, dans laquelle les surfaces inclinées (26, 27) des blocs de carbone (10), constituant le fond de cuve de cathode, sont traitées pour réduire la pénétration du sodium.

11. Cuve électrolytique selon la revendication 2, 3 ou une quelconque des revendications 4 à 9 quand elles dépendent de la revendication 2, dans laquelle les surfaces inclinées (26, 27) des blocs de carbone constituant le fond de cuve de cathode, sont revêtues d'une couche (35) qui réduit la pénétration du sodium.

12. Cuve électrolytique selon la revendication 2, 3 ou une quelconque des revendications 4 à 9 quand elles dépendent de la revendication 2, dans laquelle les surfaces inclinées (26, 27) des blocs de carbone constituant le fond de cuve de cathode, sont revêtues d'une couche (35) qui, avant ou à l'utilisation, devient plus dure que le bloc de cathode en carbone.

13. Cuve électrolytique selon la revendication 2, 3 ou une quelconque des revendications 4 à 9 quand elles dépendent de la revendication 2, dans laquelle les blocs de cathode en carbone (10) restent stables dimensionnellement pendant l'électrolyse.

14. Cuve électrolytique selon la revendication 2, 3 ou une quelconque des revendications 4 à 9 quand elles dépendent de la revendication 2, dans laquelle les blocs de cathode en carbone (10) sont résistants à une attaque chimique et mécanique.

15. Bloc de cathode en carbone (10) d'une cuve électrolytique de cathode drainée pour l'obtention par électrolyse d'aluminium à partir d'alumine dissoute dans un électrolyte fondu à base de fluorure, ayant une surface de dessus de cathode inclinée, des surfaces latérales, une surface de fond et une découpe s'étendant le long et sous le bord inférieur de la surface de dessus de cathode inclinée (26, 27), la surface de dessus de cathode inclinée, quand elle est revêtue d'une matière réfractaire mouillable à l'aluminium, formant une surface de cathode drainée, adaptée pour former une partie d'une série de surfaces en forme de V, inclinées, juxtaposées (26, 27) formant des surfaces de cathode drainées alternativement en forme de V et en forme de V inversé, parallèles, côte à côte, où, pendant l'utilisation dans une cuve, une couche d'aluminium fondu produit est drainée de façon continue, la découpe étant adaptée pour former une partie d'une rainure ou d'un canal évidé pour la collecte et l'évacuation de l'aluminium fondu drainé à partir du fond de la surface de dessus de cathode inclinée, quand le bloc est assemblé dans une cuve.

16. Bloc de cathode en carbone selon la revendication 15, dans lequel la surface de fond du bloc de cathode (10) présente une rainure (12) ou évidement analogue s'étendant le long de celui-ci généralement parallèlement à la surface de dessus et à une surface latérale du bloc de cathode, pour recevoir une barre conductrice en acier ou autre (11) pour la distribution de courant.

17. Bloc de cathode en carbone selon la revendication 15 ou 16, dans lequel ladite découpe est conformée de sorte que, après assemblage du bloc dans une cuve, la découpe forme une partie d'une rainure ou d'un canal évidé (28') avec une section transversale conformée généralement en U.

18. Bloc de cathode en carbone selon la revendication 17, dans lequel ladite découpe est conformée de sorte que, après assemblage du bloc dans une cuve, la découpe forme une partie d'une rainure ou d'un canal évidé (28') ayant une section transversale rectangulaire.

19. Bloc de cathode en carbone selon une quelconque des revendications 16 à 18, comprenant de plus, dans sa surface de dessus, au moins un canal ou une rainure transversal (29, 43) qui croise la découpe.

20. Bloc de cathode en carbone selon une quelconque des revendications 16 à 19, dans lequel sa surface de dessus est enrobée d'une couche (35) de matière réfractaire mouillable à l'aluminium.

21. Bloc de cathode en carbone selon une quelconque des revendications 16 à 20, comprenant une barre conductrice en acier ou autre (11), fixée dans la rainure (12) ou évidement analogue, dans la surface de fond du bloc par coulée de fer ou d'une autre matière de liaison électriquement conductrice.

22. Procédé pour l'électro-obtention d'aluminium dans une cuve selon une quelconque des revendications 1 à 14, dans lequel l'alumine dissoute subit une électrolyse pour produire l'aluminium sur les surfaces de cathode inclinées, conformées en V (26, 27), et est ensuite drainé à partir du fond des surfaces de cathode inclinées (26, 27) dans les rainures ou canaux évidés (28') où il est recueilli et évacué.

23. Procédé selon la revendication 22, dans lequel l'aluminium produit est maintenu à un niveau constant dans les rainures ou canaux évidés (28').
